# EUROPÄISCHE PATENTANMELDUNG

(11) **EP 2 149 418 A1**
(43) Veröffentlichungstag der Anmeldung: **03.02.2010**
(21) Anmeldenummer: 08018085.4
(22) Anmeldetag: 15.10.2008
(51) Int. Cl.: B23K 9/167, B23K 35/38, B23K 103/10

(54) **Verfahren zum Lichtbogenfügen von Aluminium**

(30) Priorität: 31.07.2008 DE 102008035734
(71) Anmelder: Linde AG, 80331 München (DE)
(72) Erfinder: Matz, Christoph, 85716 Unterschleißheim (DE)
(74) Vertreter: Samson & Partner

(57) **Zusammenfassung**

Es wird ein Verfahren zum Lichtbogenfügen, insbesondere zum Lichtbogenschweißen und/oder zum Lichtbogenlöten, von Aluminium und/oder Alumiumlegierungen unter Schutzgas mittels der Methode des Wolframinertgas(WIG)-Fügens, insbesondere des WIG-Schweißens und/oder WIG-Lötens, und/oder Wolframplasma(WPL)-Fügens, insbesondere des WPL-Schweißens und/oder WPL-Lötens, beschrieben, das dadurch gekennzeichnet ist, dass als Schutzgas ein Gasgemisch verwendet wird, das etwa 20 bis etwa 90 Vol.-% Helium, bis zu etwa 6 Vol.-% Wasserstoff und Argon als Rest enthält. Weiter wird die Verwendung dieses Schutzgasgemisches beim Wolframinertgas(WIG)-und/oder Wolframplasma(WPL)-Fügen von Aluminium und/oder Aluminiumlegierungen offenbart.

## Beschreibung

### Technisches Gebiet

Die vorliegende Erfindung betrifft ein Verfahren zum Lichtbogenfügen von Aluminium und/oder Aluminiumlegierungen unter Schutzgas mittels der Methode des Wolframinertgas(WIG)-Fügens und/oder Wolframplasma(WPL)-Fügens. Des Weiteren betrifft die Erfindung die Verwendung eines Schutzgasgemisches beim Wolframinertgas(WIG)-Fügen und/oder Wolframplasma(WPL)-Fügen von Aluminium und/oder Aluminiumlegierungen.

### Stand der Technik

Lichtbogenfügen unter Schutzgas ist eine häufig eingesetzte Fügetechnik, die insbesondere das Lichtbogenschweißen und das Lichtbogenlöten umfasst. Des Weiteren gehört zum Lichtbogenfügen auch das Verbinden von artverschiedenen Werkstoffen, wobei ein Werkstoff aufgeschmolzen wird, während der andere Werkstoff nur erwärmt wird.

Beim Lichtbogenschweißen bzw. -Löten brennt ein Lichtbogen zwischen einer in einem Brenner angeordneten Elektrode und dem zu bearbeitenden Werkstück. Eine Schweißverbindung entsteht hierbei durch Aufschmelzen des Grundwerkstoffs und eines eventuell vorhandenen Zusatzwerkstoffes bzw. des Lots an der Bearbeitungsstelle im Lichtbogen und anschließendes Wiedererstarren des Werkstoffs.

Hierbei werden zum Lichtbogenschweißen oder -Löten unter Schutzgas verschiedene Schweißverfahren eingesetzt: Neben dem Verfahren mit abschmelzender Elektrode, dem sogenannten Metallschutzgas(MSG)-Schweißen, zu dem das Metallaktivgas(MAG)-Schweißen und das Metallinertgas(MIG)-Schweißen gehören, sowie dem Metallschutzgas(MSG)-Löten existieren das mit nicht abschmelzender Elektrode arbeitende Wolframinertgas(WIG)-Schweißen und das Wolframinertgaslöten sowie das Wolframplasma(WPL)-Schweißen und das Wolframplasmalöten.

Das Schweiß- bzw. Lötverhalten kann durch eine geeignete Schutzgasauswahl beeinflusst werden. Beim WIG-Schweißen oder -Löten werden üblicherweise als Schutzgas inerte oder sehr schwach aktive Gase bzw. Gasmischungen eingesetzt. Schutzgase, welche zum WIG-Schweißen geeignet sind, sind beispielsweise in der Druckschrift EP 0 544 187 A1, in der Druckschrift EP 1 607 168 A1 oder in der Druckschrift EP 0 639 427 A1 beschrieben.

Beim WIG-Schweißen von Aluminium werden herkömmlich Argon oder Argon/Helium-Gemische mit maximal 70 Vol.-% Helium oder auch heliumreiche Argon/Helium-Gemische (mindestens 75 Vol.-% Helium, bevorzugt mindestens 85 Vol.-% Helium) als Schutzgas eingesetzt (siehe z.B. die Druckschriften DE 40 07 673 A1 und EP 0 982 097 A1).

### Zusammenfassung der Erfindung

In einem ersten Aspekt betrifft die Erfindung ein Verfahren zum Lichtbogenfügen, insbesondere zum Lichtbogenschweißen und/oder zum Lichtbogenlöten, von Aluminium und/oder Alumiumlegierungen unter Schutzgas mittels der Methode des Wolframinertgas(WIG)-Fügens, insbesondere des WIG-Schweißens und/oder WIG-Lötens, und/oder Wolframplasma(WPL)-Fügens, insbesondere des WPL-Schweißens und/oder WPL-Lötens, das dadurch gekennzeichnet ist, dass als Schutzgas ein Gasgemisch verwendet wird, das 20 bis 90 Vol.-% Helium, bis zu 6 Vol.-% Wasserstoff und Argon als Rest enthält.

In einem zweiten Aspekt betrifft die Erfindung die Verwendung des oben definierten Schutzgasgemisches beim Wolframinertgas(WIG)- und/oder Wolframplasma(WPL)-Fügen von Aluminium und/oder Aluminiumlegierungen.

### Beschreibung der Ausführungsformen

Aluminium ist, wenn es in sauerstoffhaltiger Atmosphäre vorliegt, von einer passivierenden Aluminiumoxidschicht bedeckt. Beim Schweißen oder Löten von Aluminium und Aluminiumlegierungen muss diese Oxidschicht auf irgendeine Art und Weise beseitig werden, da sonst durch Oxideinschlüsse Ungänzen oder Unregelmäßigkeiten in der Schweißnaht bzw. Lötnaht entstehen.

Üblicherweise erfolgt das WIG- und WPL-Schweißen von Aluminium im Wechselstrom (AC)-Verfahren. Beim Wechselstrom-WIG-Schweißen (AC-WIG-Schweißen) und -WPL-Schweißen (AC-WPL-Schweißen) bzw. -Löten von Aluminium und Aluminiumlegierungen werden die Oxide in der Positiv-Phase an der Woframelektrode, und damit Negativ-Phase am Werkstück, an der Werkstückoberfläche elektrisch zersetzt.

Alternativ können noch die jeweiligen Gleichstromverfahren (+/-DC) eingesetzt werden. Die +DC-Verfahren haben den Vorteil der sehr guten Reinigungswirkung an der negativen Werkstückoberfläche, bringen jedoch wegen der punktuellen Ausprägung des Anoden-brennflecks eine sehr hohe thermische Belastung für die Wolframelektrode mit sich. Sie können deshalb nur bei geringen Stromstärken und entsprechend dünnwandigen Bauteilen eingesetzt werden.

Die -DC-Verfahren haben keine elektrische Reinigungswirkung am Werkstück, dafür aber eine geringere thermische Belastung für die Wolframelektrode. Dies wird genutzt, um bei hohen Stromstärken in Verbindung mit hoch heliumhaltigen Schutzgasen einen sehr intensiven Wärmeeintrag zu bewerkstelligen. Dieser reicht aus, ein Schmelzbad zu bilden, auf dem die Oberflächenoxide schwimmen und vom Lichtbogendruck zur Seite geschwemmt werden. Neben dem Verbindungsschweißen wird dies z.B. vorteilhaft beim Reparaturschweißen von dickwandigen Bauteilen, die nicht ausgebaut oder vorgewärmt werden können, durch Gleichstrom-WIG-Schweißen mit negativer Polung der Wolframelekrode (DC-Minuspol-WIG-Vefahren) ausgenutzt. Nur in diesem Verfahren können mittels des konzentrierten Wärmeübergangs durch die punktförmige Ausprägung des Anoden-Brennflecks und trotz der hohen Wärmeableitung des großvolumigen Werkstücks ausreichende Schweißtemperaturen zum Schmelzen des Aluminiums und/oder der Alumiumlegierung erreicht werden, so dass sich ein Schweißbad bilden kann. Dadurch entfällt jedoch die Reinigungswirkung der Positiv-Phase (Negativ-Phase am Werkstück).

Da beim Gleichstrom-Minuspol-WIG-Schweißen von Aluminium und Aluminiumlegierungen üblicherweise Ar/He Schutzgase mit hohem Heliumanteil (≥ 85%) verwendet werden, können die Oberflächenoxide jedoch durch die sehr intensive Wärmeübertragung auf dem Aluminium zur Seite geschwemmt werden. Helium besitzt bekanntlich eine hohe lonisationsenergie und hohe spezifische Wärmeleitfähigkeit. Aufgrund der Tatsche, dass keine chemische Zersetzung der Oxide stattfindet, steigt jedoch die Gefahr von Ungänzen in der Schweißnaht durch Oxideinschlüsse. Außerdem lässt die Qualität der Nahtoberfläche sehr zu wünschen übrig, da sie rau ist und die in großem Maß seitlich angeschwemmten Oxide dunkelgrau erscheinen, was zum Eindruck einer "Überalterung" führt.

Die Verwendung von Wasserstoff in Schutzgasen zum Schweißen und Löten von Aluminium und Aluminiumlegierungen wird herkömmlich vermieden, da Wasserstoff die Hauptursache für eine Porosität und damit Schädigung der Schweißnaht bzw. Lötnaht ist.

Es wurde nun überraschend gefunden, dass relativ geringe Zugaben von Wasserstoff zum Helium/Argon-Schutzgas bei negativer Polung der Wolframelektrode zu einer Verbesserung des Aussehens der Schweißnaht bzw. Lötnaht führen, ohne dass diese übermäßig porös wird. Ungänzen werden vermieden und demgemäß besitzt die Schweißnaht bzw. Lötnaht eine hohe Qualität und ist optisch hochwertig.

Ohne durch eine Theorie gebunden sein zu wollen, wird angenommen, dass die ionisierten, positiv geladenen Wasserstoffatome beim Gleichstrom-WIG-Schweißen mit positiver Polung bevorzugt in die Schweißnaht wandern und dort Poren bilden, bei negativ gepolter Wolframelektrode jedoch vorwiegend zur negativ geladenen Wolframelektrode wandern. Entsprechend nimmt man an, dass im letztgenannten Fall die Elektronen vorwiegend zum Werkstück wandern und dort die Oberflächenoxide reduzieren.

Ein Nebeneffekt ist, dass durch die Verwendung des äußerst wärmeleitfähigen Wasserstoffs Helium im Schutzgas eingespart werden kann, wodurch dieses billiger wird.

In einem Schutzgas für das erfindungsgemäß DC-Minuspol-WIG- und -WPL-Schweißen bzw. -Löten von Aluminium beträgt der Wasserstoffanteil vorteilhaft gleich oder weniger als etwa 6 Vol.-% und der Heliumanteil etwa 20 bis etwa 90 Vol.-%, wobei der Rest Argon ist. Ein bevorzugte Kombination ist insbesondere etwa 0,3 bis etwa 4 Vol.-% Wasserstoff und etwa 30 bis etwa 80 Vol.-% Helium, wobei der Rest Argon ist. Gemäß einer ersten vorteilhaften Ausgestaltung liegen nun bevorzugte Wasserstoffgehalte bei etwa 0,1 bis etwa 1,8 Vol.-%, etwa 0,2 bis etwa 1,5 Vol.-%, etwa 0,3 bis etwa 1,2 Vol.-% und etwa 0,8 Vol.-%. Bevorzuge Heliumgehalte in Kombination mit den angegebenen Wasserstoffgehalten der ersten vorteilhaften Ausgestaltung liegen bei etwa 40 bis etwa 90 Vol.-% Helium, etwa 50 bis etwa 80 Vol.-% Helium, etwa 60 bis etwa 70 Vol.-% Helium und etwa 60 Vol.-% Helium. Gemäß einer zweiten vorteilhaften Ausgestaltung liegen bevorzugte Wasserstoffgehalte bei etwa 2,5 bis etwa 6 Vol.%, etwa 3,5 bis etwa 6 Vol.-%, etwa 4 bis etwa 6 Vol.-% und etwa 4 Vol.-%. Die bevorzugten Heliumgehalte der zweiten vorteilhaften Ausgestaltung liegen bei etwa 20 bis etwa 35 Vol.-% Helium, etwa 25 bis etwa 35 Vol.-% Helium und etwa 35 Vol.-% Helium.

Des Weiteren hat sich herausgestellt, dass ein flacher Anschleifwinkel der Wolframelektrode von > 45° vorteilhaft ist. Bevorzugt beträgt dieser sogar > 60° bis zu 180°. Dadurch wird der Lichtbogendruck auf das Schweißbad erhöht und eventuell vorhandener Wasserstoff kann leichter aus diesem heraus diffundieren.

Das erfindungsgemäße Schutzgas eigent sich vorteilhaft für manuelle und teilweise oder vollständig mechanisierte und automatisierte Schweißungen.

Die im Einzelfall verwendete Menge der Schutzgaskomponenten richtet sich unter anderem nach der Stromstärke, der Schweißposition, den Grund- und Zusatzwerkstoffen (Al-Legierungstypen) und/oder dem Anschleifwinkel der Wolframelektrode und kann vom Fachmann leicht empirisch unter Berücksichtigung der Porosität und des Aussehens festgelegt werden.

## Patentansprüche

**1.** Verfahren zum Lichtbogenfügen, insbesondere zum Lichtbogenschweißen und/oder zum Lichtbogenlöten, von Aluminium und/oder Alumiumlegierungen unter Schutzgas mittels der Methode des Wolframinertgas(WIG)-Fügens, insbesondere des WIG-Schweißens und/oder WIG-Lötens, und/oder Wolframplasma(WPL)-Fügens, insbesondere des WPL-Schweißens und/oder
WPL-Lötens,
**dadurch gekennzeichnet,**
**dass** als Schutzgas ein Gasgemisch verwendet wird, das
- etwa 20 bis etwa 90 Vol.-% Helium,
- bis zu etwa 6 Vol.-% Wasserstoff
- und Argon als Rest
enthält.

**2.** Verfahren nach Anspruch 1, **dadurch gekennzeichnet, dass** das Gasgemisch etwa 0,3 bis etwa 4 Vol.-% Wasserstoff und etwa 30 bis etwa 80 Vol.-% Helium enthält.

**3.** Verfahren nach Anspruch 1, **dadurch gekennzeichnet, dass** das Gasgemisch etwa 40 bis etwa 90 Vol.-%, bevorzugt etwa 50 bis etwa 80 Vol.-% oder etwa 60 bis etwa 70 Vol.-% und insbesondere etwa 60 Vol.-% Helium enthält.

**3.** Verfahren nach Anspruch 3, **dadurch gekennzeichnet, dass** das Gasgemisch etwa 0,1 bis etwa 1,8 Vol.-%, bevorzugt etwa 0,2 bis etwa 1,5 Vol.-% oder etwa 0,3 bis etwa 1,2 Vol.-% und insbesondere etwa 0,8 Vol.-% Wasserstoff enthält.

**4.** Verfahren nach Anspruch 1 oder 2, **dadurch gekennzeichnet, dass** das Gasgemisch etwa 20 bis etwa 35 Vol.-%, bevorzugt etwa 25 bis etwa 35 Vol.-% und insbesodere etwa 35 Vol.-% Helium enthält.

**5.** Verfahren nach Anspruch 4, **dadurch gekennzeichnet, dass** das Gasgemisch etwa 2,5 bis etwa 6 Vol.%, bevorzugt etwa 3 bis etwa 6 Vol.-% oder etwa 4 bis etwa 6 Vol.-% und insbesondere etwa 4 Vol.-% Wasserstoff enthält.

**6.** Verfahren nach einem der Ansprüche 1 bis 5, **dadurch gekennzeichnet, dass** die Methode des WIG-Fügens oder WPL-Fügens ein Gleichstrom-WIG- oder -WPL-Fügen ist.

**7.** Verfahren nach Anspruch 6, **dadurch gekennzeichnet, dass** bei der Methode des Gleichstrom-WIG-Fügens oder -WPL-Fügens die Wolframelektrode negativ gepolt ist.

**8.** Verfahren nach einem der Ansprüche 1 bis 7, **dadurch gekennzeichnet, dass** der Anschleifwinkel der Wolframnadel mehr als etwa 45°, bevorzugt etwa 60° und bis zu 180° beträgt.

**9.** Verwendung eines Schutzgasgemisches, wie in einem der Ansprüche 1 bis 5 definiert, beim Wolframinertgas(WIG)- und/oder Wolframplasma(WPL)-Fügen von Aluminium und/oder Aluminiumlegierungen.
